# EUROPEAN PATENT SPECIFICATION

(11) **EP 3 702 974 B1**
(45) Date of publication and mention of the grant of the patent: **19.11.2025**
(21) Application number: 19315010.9
(22) Date of filing: 27.02.2019
(51) Int. Cl.: G06N 3/126, G06N 20/00, G06Q 10/20, H04L 41/16, H04L 43/0817

(54) **SYSTEMS AND METHODS FOR OPERATING A DATA CENTER BASED ON A GENERATED MACHINE LEARNING PIPELINE**
SYSTEME UND VERFAHREN ZUM BETRIEB EINES DATENCENTERS AUF BASIS EINER PIPELINE MIT ERZEUGTEM MASCHINELLEM LERNEN
SYSTÈMES ET PROCÉDÉS DE FONCTIONNEMENT D'UN CENTRE DE DONNÉES BASÉ SUR UN PIPELINE D'APPRENTISSAGE MACHINE GÉNÉRÉ

(43) Date of publication of application: 02.09.2020
(73) Proprietor: OVH, 59100 Roubaix (FR)
(72) Inventor: Parmentier, Laurent, 59491 Villeneuve d'Ascq (FR); Nicol, Olivier, 59200 Tourcoing (FR); Rannou, Christophe, 35760 Saint Gregoire (FR)
(74) Representative: BCF Global

(56) References cited:
- "Gesture Recognition", vol. 64, 24 June 2016, SPRINGER INTERNATIONAL PUBLISHING, Cham, ISBN: 978-3-319-57021-1, ISSN: 2520-131X, article RANDAL S. OLSON ET AL: "TPOT: A Tree-Based Pipeline Optimization Tool for Automating Machine Learning : Methods, Systems, Challenges", pages: 151 - 160, XP055614626, DOI: 10.1007/978-3-030-05318-5_8
- WILIE WONG: "Five Ways Machine Learning Will Transform Data Center Management", 14 November 2018 (2018-11-14), XP055614627, Retrieved from the Internet <URL:https://www.datacenterknowledge.com/print/168245> [retrieved on 20190822]
- GIJSBERS PIETER: "Automatic construction of machine learning pipelines", 30 October 2017 (2017-10-30), pages 1 - 65, XP93201122, Retrieved from the Internet <URL:https://pure.tue.nl/ws/portalfiles/portal/90852427/Thesis_AutoML_Gijsbers_0746644.pdf>

## Description

### FIELD

Embodiments described herein relate generally to systems and methods for operating data centers based on a generated machine learning pipeline, and more particularly, to systems and methods for operating, monitoring and/or controlling infrastructures of a data center based on machine learning pipelines generated on-demand and/or within a limited amount of time and/or with limited processing resources.

### BACKGROUND

Operating large infrastructures connected to the Internet, such as a data center, typically involves monitoring and/or controlling a very large number of hardware equipment while ensuring quality of service and security for clients/users of the data center. Such hardware equipment may comprise servers, cooling systems, power distribution units, networking devices (switch, rooters, etc.) and dedicated systems allowing monitoring, orchestrating and controlling of the various hardware equipment. In certain instances, orchestrating and controlling may involve collecting tremendous amount of data, such as for example, but without being limitative, health monitoring data (e.g., temperature of a hardware component, temperature of a cooling medium, operational status, performance indicator, etc.), data relating to network traffic monitoring/filtering (e.g., to detect or prevent potential attacks or intrusions) and/or data relating to user's behaviors (e.g., to detect or prevent potential frauds).

Recent developments in the field of artificial intelligence, in particular in the field of Machine Learning (ML), has enabled automatic building of mathematical models from sample data (i.e. training data) which may then be executed for the purpose of decision/prediction making. ML approaches have demonstrated to be well suited for applications relating to predictions based on heath monitoring data or detection of network intruders. Nevertheless, bringing ML approaches to the field of operating large scale infrastructures, such as data centers, still present challenges given (1) the tremendous amount of data on which ML models need to be trained and operated and (2) a limited amount of time and/or processing power available and/or memory space available to generate a ML model properly suited and ready to be put in production for a given circumstance. Improvements are still therefore desirable.

Randal S Olson ET AL in "TPOT: A Tree-Based Pipeline Optimization Tool for Automating Machine Learning: Methods, Systems, Challenges" In: "Gesture Recognition", 24 June 2016 (2016-06-24), Springer International Publishing, Cham, XP055614626, ISSM: 2520-131X ISBN: 978-3-319-57021-1, vol. 64, pages 151-160, DOI: 10.1007/978-3-030-05318-5_8 describes systems that automate the process of designing and optimizing machine learning pipelines, more specifically an AutoML system that optimizes a series of feature preprocessors and machine learning models with the goal of maximizing classification accuracy on a supervised classification task.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

The following summary is for illustrative purposes only, and is not intended to limit or constrain the detailed description. The following summary merely presents various described aspects in a simplified form as a prelude to the more detailed description provided below.

It may be appreciated by a person skilled in the art of the present technology that given the very large amount of data relating to operations of a data center (e.g., operation data, network data, usage data, user data and/or content data), relying on ML approaches to process a very large amount of data and generate a relevant ML pipeline that properly suits an operational context that one or more systems of the data center needs to adapt to is a technical problem. This technical problem is further emphasised by a need to generate an appropriate ML pipeline within a limited period of time so as to adapt real-time operational needs while having access to limited processing resources (at least not infinite) and/or limited memory space. As the person skilled in the art of the present technology will appreciate, generating ML pipelines and ML models suited for a large set of data typically involves heavy processing over long period of time while requiring access to large memory space. This is one of the limitations of known approaches, such as evolutionary algorithm approaches, which are known to be requiring extensive processing resources and extensive memory space usage when applied to large sets of data. As a non-limiting example, a large dataset referred to as "Covertype" composed of 581,012 samples and taken from the dataset available from Remote Sensing and GIS Program, Department of Forest Sciences, College of Natural Resources, Colorado State University, Fort Collins, CO 80523 may take about thirty hours of training with a conventional approach (e.g., the approach described in R. S. Olson, N. Bartley, R. J. Urbanowicz, and J. H. Moore, "Evaluation of a Tree-based Pipeline Optimization Tool for Automating Data Science," Proceedings of GECCO 2016, Mar. 2016). These constraints in processing time and/or processing resources and memory usage are limitative in the context of real-time and real-life operations of large infrastructures, such as, but not limited to, data centers. There is therefore a need for an improved approach to generating ML pipelines and ML models.

The invention is as set out in the appended claims.

Referring back to the example of the dataset of 581,012 samples taken from the dataset "Covertype", the present technology may reach similar or better model performance (compared to the approach described in R. S. Olson, N. Bartley, R. J. Urbanowicz, and J. H. Moore, "Evaluation of a Tree-based Pipeline Optimization Tool for Automating Data Science," Proceedings of GECCO 2016, Mar. 2016)) within about four hours (assuming similar processing resources) while reducing memory space usage by a factor of about 2-3. Therefore, in addition to improving performances, the present technology also reduces costs of infrastructures as less processing resources and memory space are required to achieve a similar level of performance.

In another aspect, various implementations of the present technology provide a computer-implemented system configured to perform the method recited in the paragraphs above.

In another aspect, various implementations of the present technology provide a non-transitory computer-readable medium comprising computer-executable instructions that cause a system to execute the method recited in the paragraphs above.

In the context of the present specification, unless expressly provided otherwise, a networking device may refer, but is not limited to, a "router", a "switch", a "gateway", a "system", a "computer-based system" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures in which like numerals indicate similar elements.
Figures 1illustrates an example of a computing device that may be used to implement any of the methods described herein;
Figure 2 illustrates a diagram of a data center in accordance with embodiments of the present technology;
Figure 3 illustrates a diagram of a ML pipeline generation platform in accordance with embodiments of the present technology;
Figures 4-9 illustrate an example of a method of generating an ML pipeline in accordance with embodiments of the present technology;
Figure 10 illustrates a first flow diagram of a method for generating a machine learning (ML) pipeline in accordance with embodiments of the present technology; and
Figure 11 illustrates a second flow diagram of a method for operating a data center in accordance with embodiments of the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

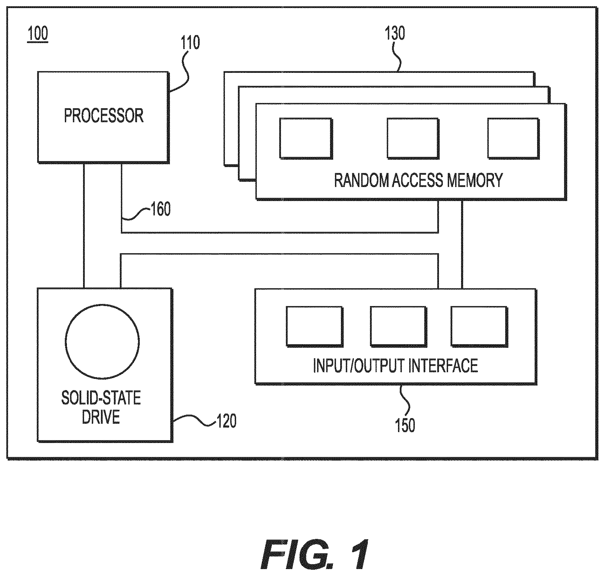

FIG. 1 illustrates a diagram of a computing environment 100 in accordance with an embodiment of the present technology is shown. In some embodiments, the computing environment 100 may be implemented by any of a conventional personal computer, a computer dedicated to operating and/or monitoring systems relating to a data center, a controller and/or an electronic device (such as, but not limited to, a mobile device, a tablet device, a server, a controller unit, a control device, a monitoring device etc.) and/or any combination thereof appropriate to the relevant task at hand. In some embodiments, the computing environment 100 comprises various hardware components including one or more single or multi-core processors collectively represented by a processor 110, a solid-state drive 120, a random access memory 130 and an input/output interface 150.

In some embodiments, the computing environment 100 may also be a sub-system of one of the above-listed systems. In some other embodiments, the computing environment 100 may be an "off the shelf" generic computer system. In some embodiments, the computing environment 100 may also be distributed amongst multiple systems. The computing environment 100 may also be specifically dedicated to the implementation of the present technology. As a person in the art of the present technology may appreciate, multiple variations as to how the computing environment 100 is implemented may be envisioned without departing from the scope of the present technology.

Communication between the various components of the computing environment 100 may be enabled by one or more internal and/or external buses 160 (e.g. a PCI bus, universal serial bus, IEEE 1394 "Firewire" bus, SCSI bus, Serial-ATA bus, ARINC bus, etc.), to which the various hardware components are electronically coupled.

The input/output interface 150 may allow enabling networking capabilities such as wire or wireless access. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example, but without being limitative, the networking interface may implement specific physical layer and data link layer standard such as Ethernet, Fibre Channel, Wi-Fi or Token Ring. The specific physical layer and the data link layer may provide a base for a full network protocol stack, allowing communication among small groups of computers on the same local area network (LAN) and large-scale network communications through routable protocols, such as Internet Protocol (IP).

According to implementations of the present technology, the solid-state drive 120 stores program instructions suitable for being loaded into the random access memory 130 and executed by the processor 110 for executing operating data centers based on a generated machine learning pipeline. For example, the program instructions may be part of a library or an application.

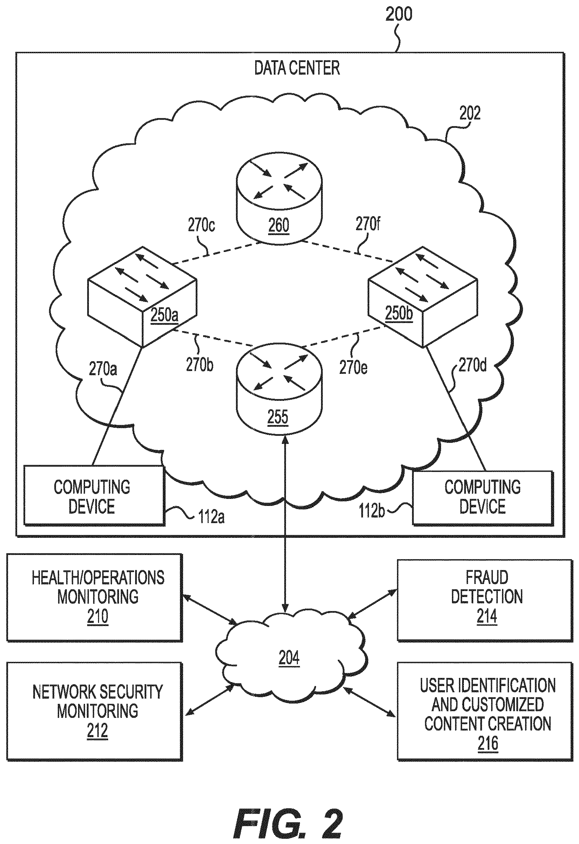

Figure 2 schematically illustrates a data center 200 implementing a network 202 and comprising multiple computing devices, such as computing devices 112a and 112b which may be implemented in accordance with the description of the device 100 of FIG. 1. The computing devices 112a and 112b may implement computing nodes and/or servers or cluster of servers enabling services to users/clients of the data center 200.

The network 202 may provide interconnections for communications between the computing devices through various network devices. The network 202 may include various network devices, such as switches 250a-250b, router devices 255, core router devices 260 and network links 270a-270g. The router devices 255 may connect the network 202 to the Internet and/or to a dedicated network 204. As illustrated, the network 202 may be in communication, via the dedicated network 202, with multiple systems 210, 212, 214 and 216 each implementing one or more functionalities required for the operating, monitoring and/or orchestrating the data center 202.

The system 210 implements functionalities relating to the monitoring of the health and/or operations of the data center. Broadly speaking, such functionalities aim at maintaining the data center 200 in operable conditions and determine if maintenance is required. The maintenance may be reactive (i.e., in response to an identified failure) and/or preventive (i.e., based on a prediction of a potential failure). However, the invention as defined by the claims only covers the embodiments comprising predictive maintenance. In some embodiments, the maintenance may involve predictive control of air conditioning units and/or disk failure detection. The monitoring of the health and/or operations of the data center 200 involve accessing very large sets of operation data generated by sensors (e.g., temperature sensors, air sensors, etc.) and/or generated by the various devices implementing the data center 200 (e.g., automatic status reports generated by components such as motherboards of servers, etc.). As an example, operation data may be generated by the computing devices 112a, 112b (e.g., by the server or clusters of servers), switches 250a-250b, router devices 255, core router devices 260 and network links 270a-270g. The type of operation data is not limitative and multiple variations may be envisioned without departing from the scope of the present technology. In some embodiments, the operation data may also be leveraged to properly orchestrate deployment or removal of hardware or software components. For instance, the system 210 may be relied upon to dynamically allocate resources based on current or anticipated stages of operations. Such resource allocation may involve, without being limitative, increasing a network capacity and/or a processing capacity (e.g., via the creation and/or control over virtual machines operated by the computing devices).

In some unclaimed embodiments, the system 212 implements functionalities relating to the monitoring of the security of the network of the data center 200. Broadly speaking, such functionalities aim at monitoring/filtering network traffic (e.g., to detect or prevent potential attacks or intrusions). As an example, monitoring/filtering network traffic may involve filtering illegitimate network packets while letting legitimate network packets access a network of the datacenter. Such filtering may involve processing of a very large amount of network data while ensuring quality of service to be rendered to legitimate users and clients of the datacenter (e.g., a latency in providing a given service hosted at the datacenter). In some embodiments, network data may refer to the network traffic itself (e.g., data packets), metadata (e.g., information associated or to be associated with one or more network packets) and/or data representing network traffic at various granularity levels.

In some unclaimed embodiments, the system 214 implements functionalities relating to the detection of fraud attempts against the data center 200. Broadly speaking, such functionalities may aim at monitoring/filtering user's behavior with services hosted by the data centers. As an example, monitoring/filtering user's behavior may involve identifying attempts of a user to intrude into areas of the network 202 in violation of permissions associated with the user. Such monitoring/filtering may also involve processing of a very large amount of usage data given (1) a number of users/clients using one or more services hosted by the data center and (2) a volume of usage data generated by each user/client. In some embodiments, usage data may refer to data generated by one or more services hosted by the data center, data relating to a profile of a user and/or data generated from a combination of profiles and interactions of users/clients with the one or more services.

In some unclaimed embodiments, the system 216 implements functionalities relating to the management of user accounts and/or sharing of information with user or potential users of the data center 200. Broadly speaking, such functionalities may aim at managing information relating to users or users' profiles and/or creating content to be transmitted to users or potential users. In some embodiments, the system 216 may implement detection of phishing attempts, SPAM detection and/or forbidden content detection. In some embodiments, the system 216 may access to a user profile store, a content store and/or an application logger and therefore may involve the system 216 accessing and/or processing very large sets of user data and/or content data. As for the usage data, the very large number of user data and/or content data may be correlated to (1) a number of users/clients using one or more services hosted by the data center and (2) a volume of user data and/or content data generated by each user/client.

Referring to the systems 210-216, it may be appreciated that given the very large amount of data relating to operations of the data center 200 (e.g., operation data, network data, usage data, user data and/or content data), relying on ML approaches to process the very large amount of data and generate a relevant ML pipeline that properly suits an operational context that one or more of the systems 210-216 needs to adapt to is a technical problem. This technical problem is further emphasised by a need to generate an appropriate ML pipeline within a limited period of time so as to adapt real-time operational needs while having access to limited processing and/or memory resources. As the person skilled in the art of the present technology will appreciate, generating ML pipelines and ML models suited for a large set of data typically involves heavy processing and/or large memory space usage over a long period of time. This is one of the limitations of known approaches, such as evolutionary algorithm approaches, which are known to be requiring extensive processing resources when applied to large sets of data. These constraints are limitative in the context of real-time and real-life operations of large infrastructures, such as, but not limited to, data centers. There is therefore a need for an improved approach to generating ML pipelines and ML models.

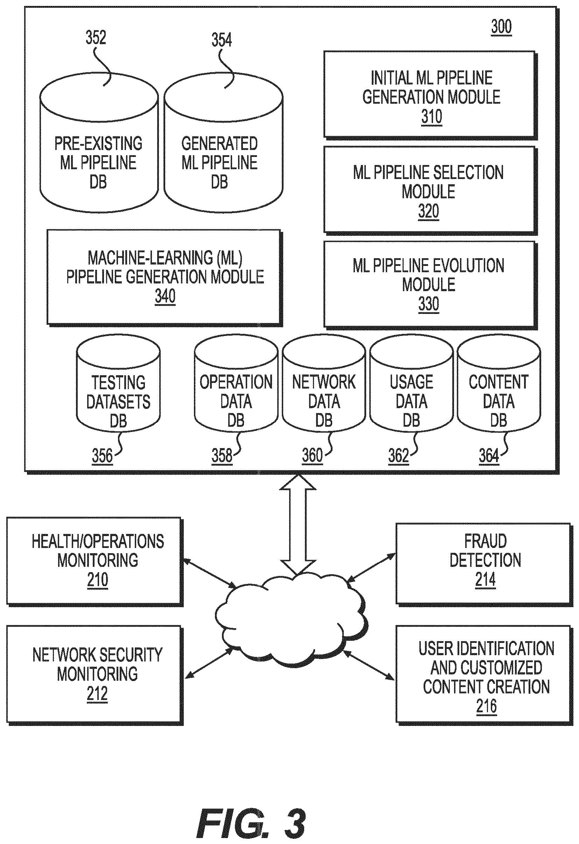

Turning now to Figure 3, an exemplary embodiment of a system 300 allowing generating a ML pipeline and/or a ML model to be used in the context of operating the data center 200 is described. The system 300 aims at addressing at least some of the limitations of prior ML pipeline/model generation methods, including methods of the field called automatic ML (i.e., AutoML). In some embodiments, the system 300 may be referred to, without being limitative, as a ML pipeline generation platform. As an exemplary embodiment, the system 300 operates a ML pipeline generation module 340 which operates one or more sub-modules, such as a random ML pipeline generation module 310, a ML pipeline selection module 320 and a ML pipeline evolution module 330. The system 300 may also comprise and/or access to multiple databases. As an example, the system 300 may access a pre-existing ML primitive database 352, a generated ML pipeline database 354, a testing datasets database 356, an operation data database 358, a network data database 360, a usage data database 362 and/or a content data database 362. In the illustrated embodiment, the operation data database 358 may be fed by the system 210, the network data database 360 may be fed by the system 212, the usage data database 362 may be fed by the system 214 and the content data database 362 may be fed by the system 216.

In the illustrated embodiment of FIG. 3, the system 300 communicates with one or more of the systems 210-216. In some embodiments the system 300 may be a dedicated system for generating ML pipelines relied upon by each one of the systems 210-216. In alternative embodiments, the system 300 may be distributed across various systems and/or be a sub-system of one or more of the systems 210-216.

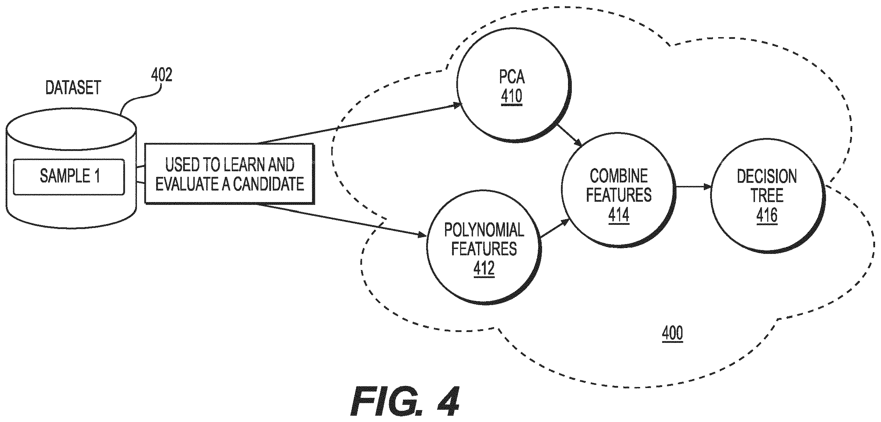

Turning now to FIG. 4, an exemplary embodiment of a machine learning (ML) pipeline 400 is illustrated. Broadly speaking, a ML pipeline may be defined as a framework allowing (1) converting raw data to data usable by a ML algorithm, (2) training an ML algorithm and/or (3) using the output of the trained ML algorithm (the ML model) to perform action such as actions relating to operating a data center. Analogy to the concept of "pipeline" aims at illustrating a process through which data is processed to generate an actionable software module, i.e., an ML model.

In some embodiments, turning raw data into data usable by the ML algorithm may be referred to as "pre-processing". Without being limitative, pre-processing may comprise feature extraction methods, feature selection methods and/or cleaning data methods. In some embodiments, the pre-processing may comprise executing principal component analysis (PCA) which may be summarized as a linear dimensionality reduction using singular value decomposition of a dataset to project the dataset to a lower dimensional space. In some embodiments, the pre-processing may also comprise a combine features method allowing creation of a new data frame from two other data frames. In some embodiments, this combination may comprise the outpout from previous nodes (namely PCA and Polynomial features in FIG. 4) which may create a transformed dataset which has potentially gained more information from the two different pre-processing methods. Other pre-processing approaches may also comprise, for example, and without being limitative, Binarizer, FeatureAgglomeration, MaxAbsScaler, MinMaxScaler, Normalizer, PCA, RBFSampler, RobustScaler, StandardScaler, SelectFwe, SelectPercentile, VarianceThreshold.

In some embodiments, the ML pipeline may also comprise a step of selecting an ML algorithm amongst a plurality of ML algorithms. Non limitative examples of ML algorithms may include non-linear algorithm, linear regression, logistic regression, decision tree, support vector machine, naïve bayes, K-nearest neighbors, K-means, random forest, dimensionality reduction, neural network, gradient boosting, adaboost, lasso, elastic net, ridge, bayesian ridge, Automatic Relevance Determination (ARD) regression, Stochastic Gradient Descent (SGD) regressor, passive aggressive regressor, k-neighbors regressor and/or Support Vector Regression (SVR). Other ML algorithms may also be envisioned without departing from the scope of the present technology.

In some embodiments, once selection of the ML algorithm is made, configuration of parameters relating to the ML algorithm may be executed. In some embodiments, the parameters may comprise hyper parameters (e.g., parameters of a classifier, regressor, etc) which may be configured prior to the learning process to which the ML algorithm is subjected to. In some embodiments, the parameters may be polynomial features allowing better ML model fitting with a dataset. The polynomial features may be implemented as a feature matrix consisting of all polynomial combinations of features with a degree less than or equal to a specified degree. The configuration of parameters of the ML algorithm may be executed before, during and/or after the training of the ML algorithm on a given dataset. In some embodiments, the trained ML algorithm defining the ML model may be further optimized upon being used, for example, by further refining one or more of the parameters.

As a person skilled in the art of the present technology may appreciate further to the reading of the above paragraphs, a ML pipeline may be defined as a process comprising one or more of (1) pre-processing a dataset, (2) selecting an algorithm, (3) configuring parameters associated with the algorithm, (4) training the algorithm on a dataset, (5) using the trained algorithm; (6) optimizing the trained algorithms and/or (7) the trained ML model itself (i.e., a model). Some variations may be envisioned without departing from the scope of the present technology, for example a ML pipeline may comprise an input dataset, an ML algorithm with hyperparameters and optionally one or more pre-processing methods having different parameters. In some embodiments, the ML pipeline is a ML model. In some embodiments, the ML pipeline may be defined as a process leading to a trained ML model based on a dataset. The trained ML model may then be ready to be put into production, for example, in the context of operating a data center. In some embodiments, a ML pipeline may be described as a set of characteristics comprising one or more primitives as it will be further detailed in connection with the description of FIG. 4-8.

Referring back to FIG. 4, the ML pipeline 400 is characterized by a PCA parametrization 410 (i.e., a set of parameters defining the PCA), polynomial features 412 (i.e., a set of parameters defining the polynomial features), combine features 414 and a decision tree 416. The PCA parametrization 410, the polynomial features 412, the combine features 414 and the decision tree 416 may be referred to as characteristics or primitives defining the ML pipeline 400. In some embodiments, a primitive relates to the field of genetic programming (GP). A primitive may be defined as a set of parameters, including a function and enumerated parameters (type and arity, not the values) possible for the function. Primitives may be associated with terminals (values with the type required by primitives) which may give an expression. In the case of the field of AutoML, primitives may be composed of different ML algorithms in addition to the different pre-processing methods. Terminals may be composed of hyperparameters for ML algorithms and parameters for pre-processing methods. In some embodiments, it may be possible to add primitive (new ML algorithm, new pre-processing methods, or others) and/or terminal (other values) in order to grow the search space and thus making new ML pipelines.

In the illustrated embodiment, a dataset 402 comprising a data sample "Sample 1" is also shown. In some embodiment, the dataset 402 may be used to train and/or evaluate the ML pipeline 400 in accordance with the training and evaluation methods further detailed below. In some embodiments, the ML pipeline 400 may be stored in the pre-existing ML primitive database 352 or the generated ML pipeline database 354. The dataset 402 may be stored in one of the databases 356-364.

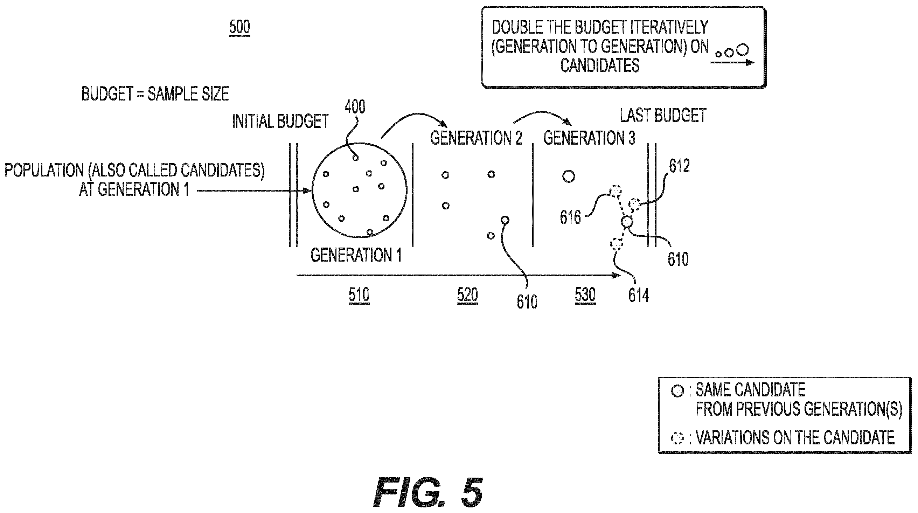

Referring now concurrently to FIG. 5-8, a computer-implemented method of generating a ML pipeline 500 will be explained. The method 500 may be operated by the ML pipeline generation module 340 which may rely on one or more sub-modules to generate an ML pipeline. In some embodiments, steps of the method 500 are executed by the initial ML pipeline generation module 310, the ML pipeline selection module 320 and the ML pipeline evolution module 330. In some embodiments, execution of modules 310-330 is managed by the ML pipeline generation module 340. The method 500 starts by generating a first set of ML pipelines 510 which may also be referred to "Generation 1" or "Population at Generation 1". Each one of the ML pipelines, such as the ML pipeline 400 described in more details in FIG. 4, may also be referred to as a "candidate". In some embodiments, the first set of ML pipelines 510 may be a set of ML pipelines previously existing and accessed, for example, from the pre-existing ML primitive database 352. In some embodiments, the first set of ML pipelines 510 may be generated by the initial ML pipeline generation module 310 accessing one or more primitives (also referred to as "characteristics") relating to ML pipelines. In some embodiments, the primitives and terminals may be accessed to create an ML pipeline. In some embodiments, the one or more characteristics may be, for example, PCA parametrization, polynomial features, combine features, a decision tree and/or any other parameter defining a portion of a ML pipeline (e.g., a pre-processing method and configuration, a ML algorithm, etc). The one or more primitives may be accessed from a database, such as the pre-existing ML primitive database 352. In some embodiments, the initial ML pipeline generation module 310 relies upon the one or more primitives to randomly generate initial ML pipelines (also referred to "Generation 0"). As an example, the initial ML pipeline generation module 310 may implement known methods of creating an initial population of evolutionary algorithms, such as, but without being limitative, the approaches described in (1) U. Garciarena, A. Mendiburu, and R. Santana, "Towards a more efficient representation of imputation operators in TPOT," arXiv:1801.04407 [cs], Jan. 2018.; (2) R. S. Olson, R. J. Urbanowicz, P. C. Andrews, N. A. Lavender, L. C. Kidd, and J. H. Moore, "Automating biomedical data science through tree-based pipeline optimization," arXiv:1601.07925 [cs], Jan. 2016. and/or (3) R. S. Olson, N. Bartley, R. J. Urbanowicz, and J. H. Moore, "Evaluation of a Tree-based Pipeline Optimization Tool for Automating Data Science," Proceedings of GECCO 2016, Mar. 2016. In some alternative embodiments, the initial ML pipeline generation module 310 pre-select/pre-filter the randomly generate initial ML pipelines so as to discard candidates that are identified as not likely to be viable. In some embodiments, a typical selection process may involve choosing an ML pipeline having good performance, usually model performance (such as accuracy). In this case the selection may rely on the approach described in K. Deb, A. Pratap, S. Agarwal, and T. Meyarivan, "A fast and elitist multiobjective genetic algorithm: NSGA-II," IEEE Transactions on Evolutionary Computation, vol. 6, no. 2, pp. 182-197, Apr. 2002., more specifically on two-objectives with a decreasing budget selecting less and less candidates. In some embodiments, a first objective may be maximizing accuracy of the ML model and the second one may be minimizing ML pipeline's complexity (represented by the number of primitives present in a pipeline).

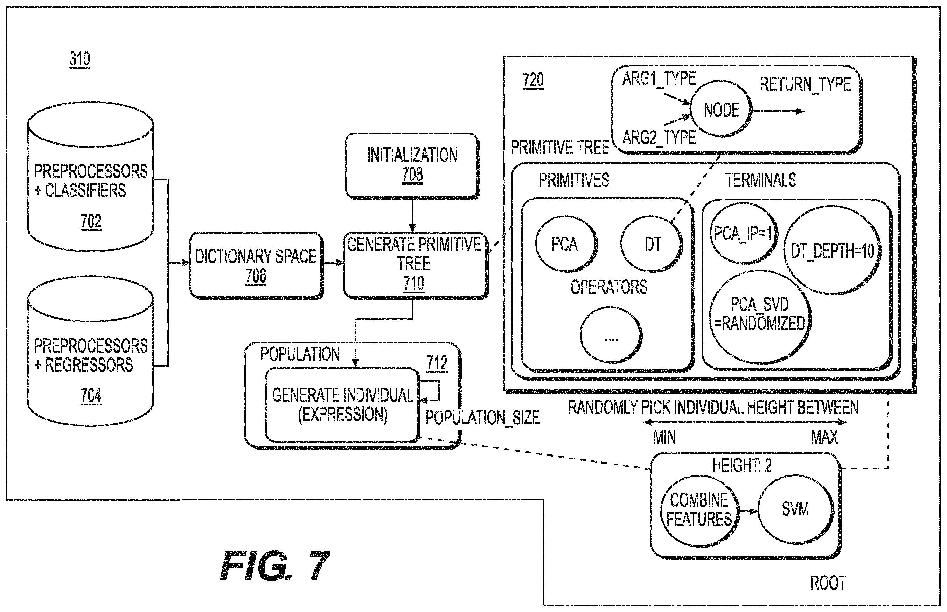

An example of implementation of the initial ML pipeline generation module 310 is exemplified at FIG. 7. This example is based on an approach further detailed in (1) U. Garciarena, A. Mendiburu, and R. Santana, "Towards a more efficient representation of imputation operators in TPOT," arXiv:1801.04407 [cs], Jan. 2018.; (2) R. S. Olson, R. J. Urbanowicz, P. C. Andrews, N. A. Lavender, L. C. Kidd, and J. H. Moore, "Automating biomedical data science through tree-based pipeline optimization," arXiv:1601.07925 [cs], Jan. 2016. and/or (3) R. S. Olson, N. Bartley, R. J. Urbanowicz, and J. H. Moore, "Evaluation of a Tree-based Pipeline Optimization Tool for Automating Data Science," Proceedings of GECCO 2016, Mar. 2016. In this example, a dictionary space 706, accesses primitives 702 and 704. In some embodiments, the dictionary space may be a search space of ML pipelines which are described in format files easily readable and editable by humans. The primitives 702 and 704 may be accessed from the pre-existing ML primitive database 352. The primitive 702 relates to pre-processors and classifiers and the primitive 704 relates to pre-processors and regressors. An initialisation module 708 may execute loading the program in memory in order to read the dictionary space which is represented as a GP problem by instantiate primitives and terminals. The dictionary 706 and the initialisation module 708 allow a primitive tree to be generated by a primitive tree generation module 710, for example a primitive tree 720 is an example of dictionary space translated in GP representing some primitives (PCA for Principal Components Analysis and DT for Decision Tree) and their parameters/hyperparameters associated in terminals. PrimitiveTree may be a tree structure containing all the primitives and terminals. Once a primitive tree is generated by the primitive tree generation module 710, a ML pipeline (also referred to as an individual) is generated by the individual generation module 712. In some embodiment, "combine features" refers to an example of a candidate (also called individual or ML pipeline instantiation in the present field of AutoML) comprising two primitives. The first one may combine the input, in this example there is no pre-processor so it may combine twice a same dataset, but in alternative embodiments if a pre-processing method is added beforehand, it may be a combination of two different inputs. In some embodiments, SVM refers to the Support Vector Machines algorithm.

Referring back to FIG. 5, once the first set of ML pipelines 510 has been generated, the ML pipeline generation module proceeds to executing the ML pipeline selection module 320. The ML pipeline selection module 320 executes training and/or evaluating of each ML pipeline of the first set of ML pipelines 510 with a dataset which size is pre-defined. The size of the dataset for a given generation is also referred to as a "budget" or a "volume". The size may be defined in octets or in any other units allowing measurement of a data volume. In some embodiments, the dataset may be extracted from one of the database 356-362. In some embodiments, the size of the dataset is defined so that a large number of ML pipelines may be trained and/or evaluated without requiring large processing power (either in terms of processing capacity and/or in running time required to complete testing or training). As an example, a large data set is extracted from one the databases 356-364 to define a testing dataset. The testing dataset is then divided into sub-sets. In order to limit required processing power, only a sub-set of the testing dataset is used for the purpose of training/testing the first set of ML pipelines 510. The size and number of sub-sets may vary. In some embodiments, the testing and/or training of the ML pipelines may be executed by the initial ML pipeline generation module 310 alone and/or in combination with the ML pipeline selection module 320.

The ML pipeline selection module 320 further executes a selection of the ML pipelines so as to select which ones of the ML pipelines of the first set of ML pipelines 510 (i.e., generation 1) are to be selected for generation of a second set of ML pipelines 520 (also referred to as "generation 2") and which ones have to be discarded. In some embodiments, the selection of the ML pipelines is implemented by a multi-objective genetic algorithm, such as, for example, but without being limitative, the NSGA-II approach further detailed in the publication from K. Deb, A. Pratap, S. Agarwal, and T. Meyarivan, "A fast and elitist multiobjective genetic algorithm: NSGA-II," IEEE Transactions on Evolutionary Computation, vol. 6, no. 2, pp. 182-197, Apr. 2002. The selection of the ML pipelines may execute sorting the ML pipelines (i.e., candidates) based on objectives in non-dominated sets of solutions, i.e., each candidate in non-dominated set does not have another candidate (excluding non-dominated set) better or equal for each objective. In an embodiment, the ML pipelines are scored based on two objectives (1) accuracy and (2) complexity of the ML pipeline. In some embodiments, scoring of the ML pipelines aims at prioritizing ML pipelines which maximize accuracy and minimize the complexity. In some embodiments, a same weight is given to the maximizing accuracy and minimizing complexity. Different weighs may also be envisioned. Alternative embodiments may also be envisioned, for example by defining the scoring based on precision, recall, false positive rate (FPR), F1-score, but also exogeneous metrics (unrelated with the model performance) such as minimizing fitting time. Once the ML pipelines are scored, the ML pipeline selection module 320 may sort the ML pipelines so as to only retain some but not all (in the illustrated example, half) of the ML pipelines (i.e., only the half having the highest scores in this case). As a result a number of ML pipelines to be retained for the generation of the second set of ML pipelines 520 is reduced (e.g., divided by two in this example). In other embodiments, the ML pipeline selection module 320 may be configured so as to only retain a predefined number of ML pipelines and/or a predefined portion of the ML pipelines (i.e., 20%, 30%, 60%, 70%, etc).

In some embodiments, the system 300 may, dynamically or via inputs from a user, adapt configurations of a number of generations before returning one or more ML pipelines, a size of a population (e.g., a size of generation 1), a size of a budget (a size of the dataset for a given generation). In some embodiments, the budget may not be limited to a size of the dataset for a given generation of ML pipelines but may also be an amount of time or processing resources allocated to the processing of a given generation, for example an amount of time for the generation and/or the evaluation of ML pipelines for a given generation. In some embodiments, the budget is directly correlated to a proportion of candidates selected from one generation to the next (e.g., budget of the dataset is doubled while the number of candidates is divided by two from one generation to the next). In some embodiments, the budget is not necessarily correlated to a proportion of candidates selected from one generation to the next as long as the budget increases from one generation to the next and the number of candidates decreases from one generation to the next.

As a non-limiting examples, a set of ML pipelines scored by the ML pipeline selection module 320 would return the following scores:

| ML Pipeline ID | Accuracy | Complexity |
|---|---|---|
| ML1 | 0.93 | 2 |
| ML2 | 0.94 | 4 |
| ML3 | 0.96 | 3 |
| ML4 | 0.956 | 4 |
| ML5 | 0.94 | 1 |
| ML6 | 0.75 | 5 |
| ML7 | 0.7 | 5 |
| ML8 | 0.6 | 5 |

Non-dominated sorting executed on the set of ML pipelines ML1-ML8 would return:

| ML Pipeline ID | Accuracy | Complexity |
|---|---|---|
| ML5 | 0.94 | 1 |
| ML3 | 0.96 | 3 |
| ML1 | 0.93 | 2 |
| ML4 | 0.956 | 4 |
| ML2 | 0.94 | 4 |
| ML6 | 0.75 | 5 |
| ML7 | 0.7 | 5 |
| ML8 | 0.6 | 5 |

Then, a selection of half the ML pipelines would return:

| ML Pipeline ID | Accuracy | Complexity |
|---|---|---|
| ML5 | 0.94 | 1 |
| ML3 | 0.96 | 3 |
| ML1 | 0.93 | 2 |
| ML4 | 0.956 | 4 |

In the illustrated embodiment, ML1, ML2 and ML4 are in a second rank but ML1 and ML4 will be preferred to ML4 and ML2 due to a crowding distance privileging diversity of solutions for a same rank.

In some embodiments, the ML pipeline selection module 320 may rely upon metrics to perform a scoring and sorting/ranking. As an example error, recall and/or precision may be used as a metric associated with a ML pipeline. Other examples will become apparent to the person skilled in the art of the present technology. The number of metrics may also vary and may not be necessary limited to two metrics (e.g., one metric, more than two metrics, etc). Once selection of the ML pipelines to be retained for the following generation has been made, the ML pipeline evolution module 330 can generates the next generation of ML pipelines.

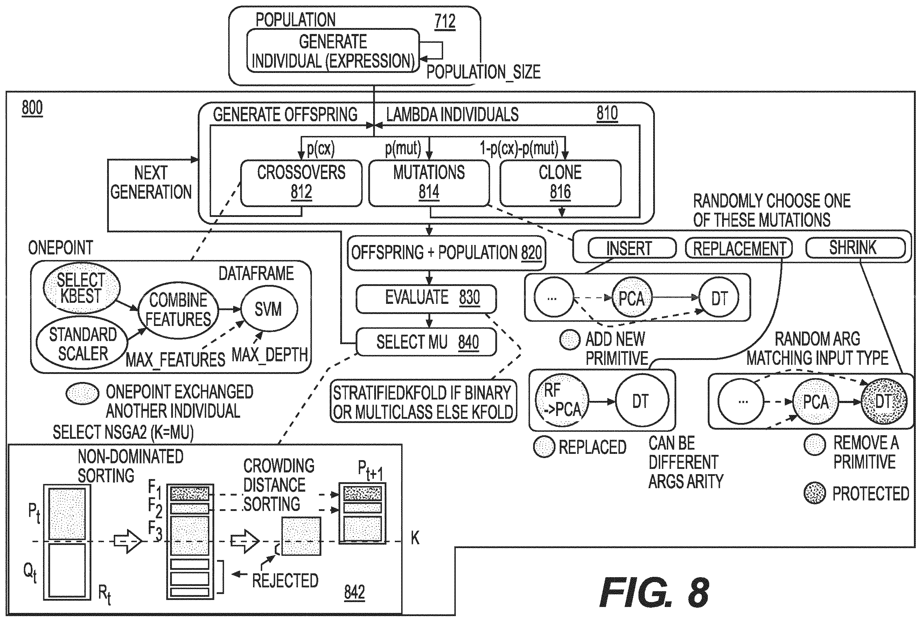

An exemplary implementation 800 of the ML pipeline evolution module 330 is illustrated at FIG. 8. In this example, the ML pipeline evolution module 330, starting from the ML pipelines of the previous generation selected by the ML pipeline selection module 320 (e.g., ML5, ML3, ML1 and ML4 from generation 1), will undertake generation of a second set of ML pipelines 520 (i.e., generation 2). In some embodiments, as the number of ML pipelines of the second set of ML pipelines 520 has been divided by two compared to the number of ML pipelines of the first set of ML pipelines 510, a budget associated with the testing dataset used to train and/or evaluate the ML pipelines of the second set of ML pipelines 520 is doubled compared to the budget associated with the testing dataset used to train and/or test of the ML pipelines of the first set of ML pipelines 510. This approach therefore allows deeper, more accurate, testing of the ML pipelines of the second set of ML pipeline 520 while limiting processing resources requiring for training and testing (as the number of candidates has been divided by two). The same approach is applied from one generation to the next thereby allowing faster convergence while improving performance measure accuracy from one generation to the next.

Even though the discussed example sets forth dividing the number of ML pipelines by two and multiplying the budget of the training dataset by two between each one of the generations, it should be understood that variations may also be envisioned wherein the number of ML pipelines is reduced, but not necessarily divided by two (e.g., reduced by a given %) and the budget is increased, but not necessarily multiplied by two (e.g., increased by a given %).

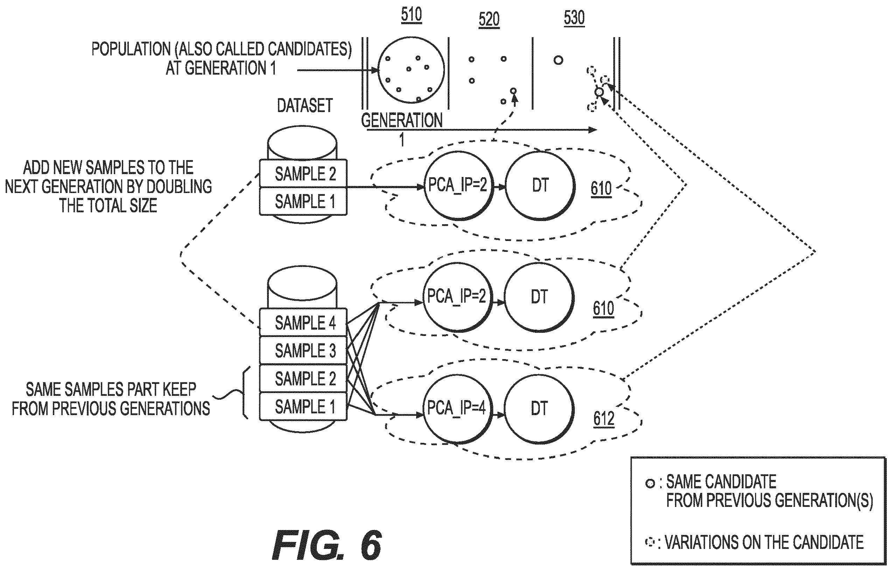

As previously explained, the ML pipeline evolution module 330 aims at generating new sets of ML pipelines from existing sets of ML pipelines. As exemplified in FIG. 6, the ML pipeline evolution module 330 generates the second set of ML pipelines 520 starting from the ML pipelines selected from the first set of ML pipelines 510. The method 800 relies on the execution of an offspring generation module 810 which generates lambda (λ) individuals (i.e., ML pipelines) from a previous generation by cloning (via the cloning step 816) the individuals and varying them by applying a crossover (via the crossover step 812) or a mutation (via the mutation step 814) thereby generating offspring individuals. In some embodiments, one point may refer to a method used in crossovers wherein one node (a primitive) may be exchanged between two candidates in order to create two new candidates.

As an example, the crossover step 812 may consist of taking two candidates (i.e., two ML pipelines) sharing at least one similar primitive and exchanging the primitive. When two candidates share a primitive (e.g., Principal Component Analysis (PCA)), it does not necessarily entails that the primitives have a same configurations (e.g., value of one or more parameters associated with the primitive). Therefore, by "exchanging" primitives, two new different candidates may be created.

As another example, the mutation step 814 may be expressed by a randomly chosen mutation, such as "Insert", "Replacement" and/or "Shrink". In some embodiments, "Insert" involves inserting a new primitive matching input/output in a candidate (i.e., inserting a new primitive matching input/output in an ML pipeline). In some embodiments, "Replacement" involves replacing a primitive by another matching input/output in a candidate (i.e., replacing a primitive by another matching input/output in an ML pipeline). In some embodiments, "Shrink" involves removing a primitive in a candidate (i.e., removing a primitive in a ML pipeline). In the illustrated example, primitives may be an ML algorithm and/or a preprocessor.

In some embodiments, the ML pipeline evolution module 330 is configured so that a probability that a crossover be applied is 10% and a probability that a mutation be applied is 90%. The ML pipeline evolution module 330 may also execute logic so that if a crossover does not work, then a mutation may be applied. Other configurations may also be applied and may be envisioned without departing from the scope of the present technology.

In some embodiments, the ML pipeline evolution module 330 generates new sets of ML pipelines (e.g., based on crossovers and/or mutations) but may also reuse candidates from the previous generation (i.e., via the clone step 816). In some embodiments, the present technology relies on a (µ,λ)-ES approach to create lambda (λ) new individuals and also reuse candidates from the previous generation at each iteration (i.e., going from one generation to the following generation). The combination of these candidates then go through the evaluation step 830 and the selection step 840 so that only selected candidates may be reused in the following generation. As previously discussed, in some embodiments, the evaluation step 830 and the selection step 840 are executed by the ML pipeline selection module 320. The (µ,λ)-ES approach allows implementation of an evolutionary algorithms approach. An example of such framework may be found in the publication "F.-A. Fortin, F.-M. D. Rainville, M.-A. Gardner, M. Parizeau, and C. Gagné, "DEAP: Evolutionary Algorithms Made Easy," Journal of Machine Learning Research, vol. 13, pp. 2171-2175, Jul. 2012".

FIG. 8 also illustrates another example 842 of a scoring and sorting process applied to candidates of a given generation. In this example, candidates are subjected to non-dominated sorting with k defining the threshold of a number of acceptable candidates. A crowding distance sorting is then applied to create a list of candidates to be used for the generation of the following generation of candidates.

Referring back to FIG. 5 and 6, the second set of ML pipelines 520 (i.e., generation 2) comprises multiple ML pipelines, including ML pipeline 610, which are trained and tested so as to select candidates (e.g., half) and to use the selected candidates to generate a third set of ML pipelines 530 (i.e., generation 3). In the illustrated example, the ML pipeline 610 remains unchanged and is part of generation 3. The ML pipeline 610 also served as a candidate to create new ML pipelines 612-616 (also referred to as variations of ML pipeline 610). Another aspect illustrated in FIG. 5 and 6 is that the budget defining a size of the dataset used to train and/or evaluate each candidate (i.e., each ML model) is doubled from one generation to the other. As an example, the ML pipeline 610 which is associated with two primitives (e.g., Principal Component Analysis (PCA) and Decision Tree (DT)) is trained and tested on a dataset with comprises two sub-datasets (Sample 1 and Sample 2) at generation 2. Then, at generation 3, the same ML pipeline 610 is trained and tested on a dataset with has been doubled compared to generation 2 and which now comprises four sub-datasets (Sample 1, Sample 2, Sample 3 and Sample 4). In the illustrated embodiment, the ML pipeline 612 has been generated starting from the ML pipeline 610 via a mutation or a crossover on the primitive PCA. The configuration of the PCA for the ML pipeline 610 is PCA_IP = 2 and the configuration for the ML pipeline 612 is PCA_IP = 4. The ML pipelines 610 and 612 sharing the same Decision Tree (DT) and a same pre-processing method which is configured differently (i.e., PCA_IP = 2 for the ML pipeline 610 and PCA_IP = 4 for the ML pipeline 612).

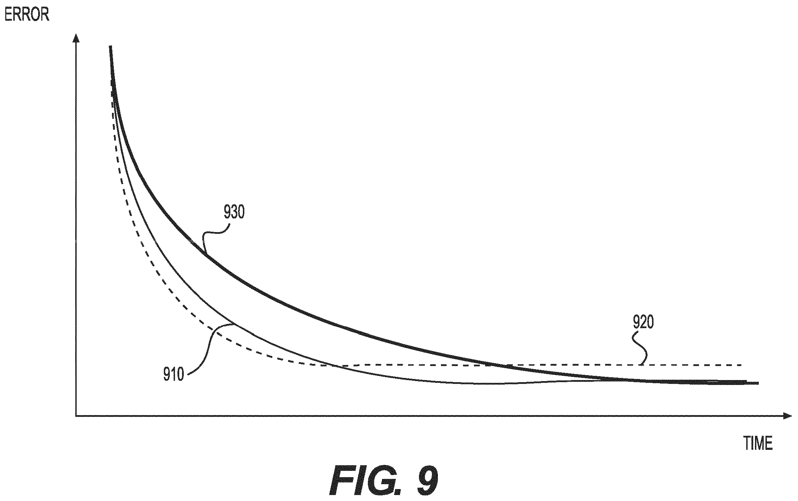

Turning now to FIG. 9, various approaches to generating ML pipelines are illustrated in terms of "error" (performance) versus "time" (processing time which can be directly correlated with an amount of processing resources required). In this example, approaches 920 and 930 are compared to an approach 910 implemented in accordance with the present technology. The approach 930 is implemented in accordance with an evolutionary algorithm method such as approaches described in (1) U. Garciarena, A. Mendiburu, and R. Santana, "Towards a more efficient representation of imputation operators in TPOT," arXiv:1801.04407 [cs], Jan. 2018.; (2) R. S. Olson, R. J. Urbanowicz, P. C. Andrews, N. A. Lavender, L. C. Kidd, and J. H. Moore, "Automating biomedical data science through tree-based pipeline optimization," arXiv:1601.07925 [cs], Jan. 2016. and/or (3) R. S. Olson, N. Bartley, R. J. Urbanowicz, and J. H. Moore, "Evaluation of a Tree-based Pipeline Optimization Tool for Automating Data Science," Proceedings of GECCO 2016, Mar. 2016. As illustrated by the graph, the approach 930 ultimately leads to better results (i.e., lower error rate) compared to the approach 920 but after a much longer time than the approach 910. The approach 920 is implemented in accordance with a Bayesian automatic ML approach starting from known ML pipelines (which creates a bias leading to lower performances). As illustrated by the graph, the approach 920 ultimately leads to lower results (i.e., higher error rate) compared to the approach 930 but after a much shorter time than the approach 930. On the other hand, the approach 910 leads to similar results than the approach 930 but in a much shorter time.

As another example, a snapshot of performances of an approach in accordance with the present technology versus an approach of identifying ML pipelines in accordance with a conventional approach is presented below:

| Conventional approach | Present technology |
|---|---|
| Number of runs: 30 | Number of runs: 30 |
| Total time: 2 347 511 seconds | Total time: 453 164 seconds |
| Time (mean): 117 375 seconds | Time (mean): 15 626 seconds |
| Time (std): 14 316 seconds | Time (std): 2 075 seconds |
| Score (mean): 0.68 | Score (mean): 0.96 |
| Score (std): 0.008 | Score (std): 0.005 |

The above results are obtained on a large dataset referred to as "Covertype" composed of 581,012 samples and taken from the dataset available from Remote Sensing and GIS Program, Department of Forest Sciences, College of Natural Resources, Colorado State University, Fort Collins, CO 80523.

The benefit in terms of processing time thereby allows creation of ML pipelines and therefore ML models which may be generated starting from operation data, network data, usage data and/or content data in a much faster way, thereby allowing flexible and fast deployment as part of operations of a data center.

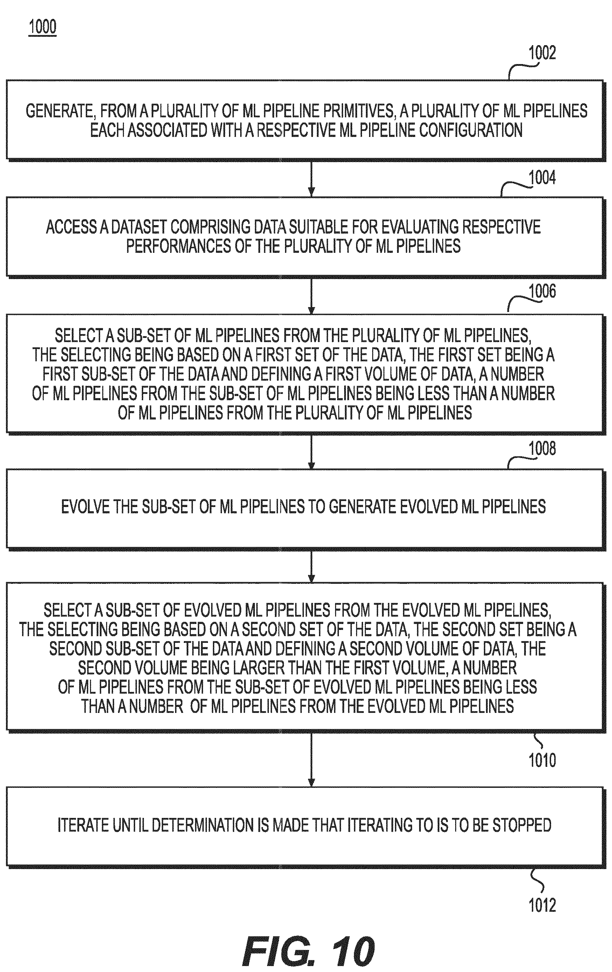

Turning now to Figure 10, a flow diagram of a method 1000 for generating a machine learning (ML) pipeline according to one or more illustrative aspects of the present technology is disclosed. In one or more embodiments, the method 1000 or one or more steps thereof may be performed by one or more computing devices or entities. The method 1000 or one or more steps thereof may be embodied in computer-executable instructions that are stored in a computer-readable medium, such as a non-transitory computer-readable medium. Some steps or portions of steps in the flow diagram may be omitted or changed in order.

At step 1002, the method 1000 generates, from a plurality of ML pipeline primitives, a plurality of ML pipelines each associated with a respective ML pipeline configuration.

At step 1004, the method 1000 accesses a dataset comprising data suitable for evaluating respective performances of the plurality of ML pipelines.

At step 1006, the method 1000 selects a sub-set of ML pipelines from the plurality of ML pipelines, the selecting being based on a first set of the data, the first set being a first sub-set of the data and defining a first volume of data, a number of ML pipelines from the sub-set of ML pipelines being less than a number of ML pipelines from the plurality of ML pipelines.

At step 1008, the method 1000 evolves the sub-set of ML pipelines to generate evolved ML pipelines. In some embodiments, evolving the sub-set of ML pipelines to generate evolved ML pipelines comprises one of applying a mutation, applying a crossover or applying a cloning to each ML pipelines of the sub-set of ML pipelines. In some embodiments, a probability that a mutation is applied is 90% and a probability that a crossover is applied is 10%.

At step 1010, the method 1000 selects a sub-set of evolved ML pipelines from the evolved ML pipelines, the selecting being based on a second set of the data, the second set being a second sub-set of the data and defining a second volume of data, the second volume being larger than the first volume, a number of ML pipelines from the sub-set of evolved ML pipelines being less than a number of ML pipelines from the evolved ML pipelines. In some embodiments, the number of ML pipelines from the sub-set of evolved ML pipelines is half the number of ML pipelines from the evolved ML pipelines and the second volume is twice the first volume. In some embodiments, the second sub-set of the data comprises the first sub-set of the data. In some embodiments, the selecting a sub-set of evolved ML pipelines from the evolved ML pipelines comprises scoring each one of the ML pipelines of the evolved ML pipelines and sorting the ML pipelines of the evolved ML pipelines.

At step 1012, iterates steps 1008 to 1010 until determination is made that iterating 1008 to 1010 is to be stopped. In some embodiments, determination that iterating 1008 to 1010 is to be stopped is based on at least one of the number of ML pipelines from the sub-set of evolved ML pipelines being equal to one (1), performances of the ML pipelines from the sub-set of evolved ML pipelines being equal or superior to a performance threshold required for operations of the datacenter (e.g., an accuracy of a ML pipeline and/or a complexity of the ML pipeline), an amount of time being exceeded (e.g., an amount of processing time allocated to executing the method 1000), or an amount of processing resources being used (e.g., an amount of processing resources allocated to executing the method 1000).

In some embodiments, the performances of the plurality of ML pipelines and the scoring are based on (1) an accuracy of a ML pipeline and (2) a complexity of the ML pipeline. In some embodiments, the sorting is based on one of non-dominated sorting or crowding distance sorting.

In some embodiments, the ML pipeline primitives comprise one of parameters relating to principal component analysis (PCA), parameters relating to polynomial features, parameters relating to combine features and parameters relating to a decision tree.

In some embodiments, the ML pipeline comprises one or more of a pre-processing routine, a selection of an algorithm, configuration parameters associated with the algorithm, a training routine of the algorithm on a dataset and/or a trained ML model.

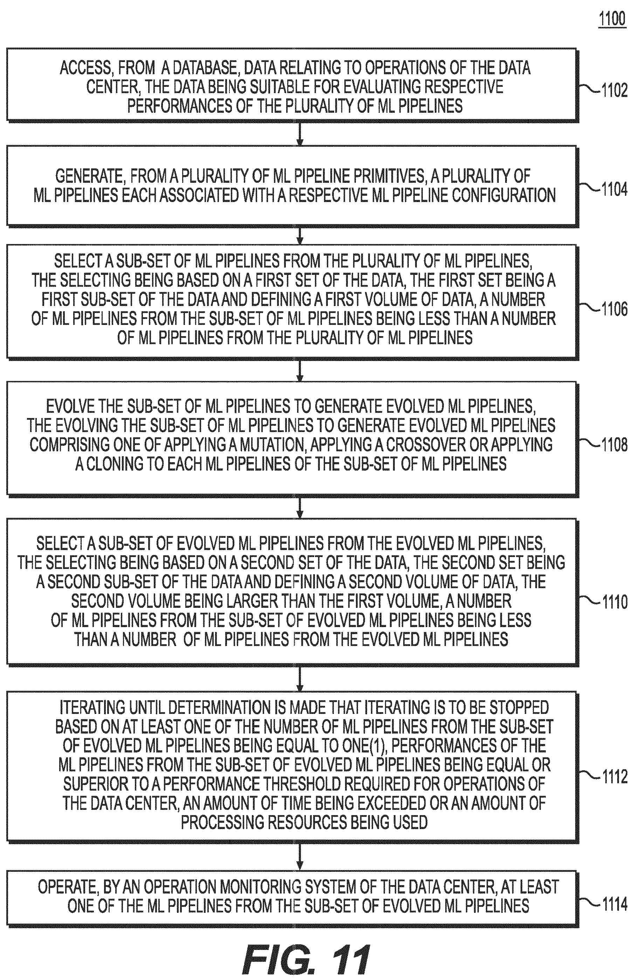

Turning now to Figure 11, a flow diagram of a method 1100 for operating a data center, according to one or more illustrative aspects of the present technology is disclosed. The operating comprises executing predictive maintenance of the data center, or network monitoring of the data center according to unclaimed embodiments, the operating being based on a generated machine learning (ML) pipeline. The method 1000 is performed by one or more computing devices or entities. The method 1100 is embodied in computer-executable instructions that are stored in a computer-readable medium, such as a non-transitory computer-readable medium. Some steps or portions of steps in the flow diagram may be omitted or changed in order.

At step 1102, the method 1100 accesses, from a database, data relating to operations of the data center, the data being suitable for evaluating respective performances of a plurality of ML pipelines. In some embodiments, the performances of the plurality of ML pipelines and the scoring are based on (1) an accuracy of a ML pipeline and (2) a complexity of the ML pipeline.

At step 1104, the method 1100 generates, from a plurality of ML pipeline primitives, the plurality of ML pipelines each associated with a respective ML pipeline configuration.

At step 1106, the method 1100 selects a sub-set of ML pipelines from the plurality of ML pipelines, the selecting being based on a first set of the data, the first set being a first sub-set of the data and defining a first volume of data, a number of ML pipelines from the sub-set of ML pipelines being less than a number of ML pipelines from the plurality of ML pipelines.

At step 1108, the method 1100 evolves the sub-set of ML pipelines to generate evolved ML pipelines, the evolving the sub-set of ML pipelines to generate evolved ML pipelines comprising one of applying a mutation, applying a crossover or applying a cloning to each ML pipelines of the sub-set of ML pipelines.

At step 1110, the method 1100 selects a sub-set of evolved ML pipelines from the evolved ML pipelines, the selecting being based on a second set of the data, the second set being a second sub-set of the data and defining a second volume of data, the second volume being larger than the first volume, a number of ML pipelines from the sub-set of evolved ML pipelines being less than a number of ML pipelines from the evolved ML pipelines. In some embodiments, the second sub-set of the data comprises the first sub-set of the data.

At step 1112, the method 1100 iterates steps 1108 to 1110 until determination is made that iterating 1108 to 1110 is to be stopped based on at least one of the number of ML pipelines from the sub-set of evolved ML pipelines being equal to one (1), performances of the ML pipelines from the sub-set of evolved ML pipelines being equal or superior to a performance threshold required for operations of the datacenter (e.g., an accuracy of a ML pipeline and/or a complexity of the ML pipeline), an amount of time being exceeded (e.g., an amount of processing time allocated to executing the method 1100), or an amount of processing resources being used (e.g., an amount of processing resources allocated to executing the method 1100).

At step 1114, the method 1100 operates, by an operation monitoring system of the data center, at least one of the ML pipelines from the sub-set of evolved ML pipelines.

In some embodiment, the number of ML pipelines from the sub-set of evolved ML pipelines is half the number of ML pipelines from the evolved ML pipelines and the second volume is twice the first volume.

In some embodiments, a probability that a mutation is applied is 90% and a probability that a crossover is applied is 10%.

In some embodiments, the selecting a sub-set of evolved ML pipelines from the evolved ML pipelines comprises scoring each one of the ML pipelines of the evolved ML pipelines and sorting the ML pipelines of the evolved ML pipelines. In some embodiments, the performances of the plurality of ML pipelines and the scoring are based on (1) an accuracy of a ML pipeline and (2) a complexity of the ML pipeline.

In some embodiments, the sorting is based on one of non-dominated sorting or crowding distance sorting.

In some embodiments, the ML pipeline primitives comprise one of parameters relating to principal component analysis (PCA), parameters relating to polynomial features, parameters relating to combine features and parameters relating to a decision tree.

In some embodiments, the ML pipeline comprises one or more of a pre-processing routine, a selection of an algorithm, configuration parameters associated with the algorithm, a training routine of the algorithm on a dataset and/or a trained ML model.

Although example embodiments are described above, the various features and steps may be combined, divided, omitted, rearranged, revised, or augmented in any desired manner, depending on the specific outcome or application. Various alterations, modifications, and improvements will readily occur to those skilled in the art. Such alterations, modifications, and improvements as are made obvious by this disclosure are intended to be part of this description, though not expressly stated herein, and are intended to be within the spirit and scope of the disclosure. Accordingly, the foregoing description is by way of example only, and not limiting. This patent is limited only as defined in the following claims.

## Claims

1. A computer-implemented method (1100) for maintaining a data center (200) in operable conditions and determining if maintenance is required based on a generated and trained machine learning, ML, pipeline, the method comprising:
(a) accessing (1102), from a database, a dataset relating to operations of the data center, the data being suitable for evaluating respective performances of a plurality of ML pipelines, wherein the dataset comprises operation data generated by sensors and/or automatic status report generated by various devices of the data center (200);
(b) generating (1104), from a plurality of ML pipeline primitives, the plurality of ML pipelines each associated with a respective ML pipeline configuration;
(c) selecting (1106) a sub-set of ML pipelines from the plurality of ML pipelines, the selecting being based on the training of each of the plurality of ML pipelines using a first set of the data, the first set being a first sub-set of the data and defining a first volume of data, a number of ML pipelines from the sub-set of ML pipelines being less than a number of ML pipelines from the plurality of ML pipelines;
(d) evolving (1108) the sub-set of ML pipelines to generate evolved ML pipelines, comprising one of applying a mutation, applying a crossover or applying a cloning to each ML pipeline of the sub-set of ML pipelines;
(e) selecting (1110) a sub-set of evolved ML pipelines from the evolved ML pipelines, the selecting being based on a second set of the data, the second set being a second sub-set of the data and defining a second volume of data, the second volume being larger than the first volume, a number of ML pipelines from the sub-set of evolved ML pipelines being less than a number of ML pipelines from the evolved ML pipelines;
(f) iterating (1112) (d) to (e) until determination is made that iterating (d) to (e) is to be stopped based on the number of ML pipelines from the sub-set of evolved ML pipelines being equal to one (1); and
(g) using the output of the remaining ML pipeline to execute predictive maintenance of the data center.

2. The method of claim 1, wherein the number of ML pipelines from the sub-set of evolved ML pipelines is half the number of ML pipelines from the evolved ML pipelines and the second volume is twice the first volume.

3. The method of claim 1, wherein a probability that a mutation is applied is 90% and a probability that a crossover is applied is 10%.

4. The method of any one of claims 1 to 3, wherein the second sub-set of the data comprises the first sub-set of the data.

5. The method of any one of claims 1 to 4, wherein the selecting a sub-set of evolved ML pipelines from the evolved ML pipelines comprises scoring each one of the ML pipelines of the evolved ML pipelines and sorting the ML pipelines of the evolved ML pipelines.

6. The method of claim 5, wherein the performances of the plurality of ML pipelines and the scoring are based on (1) an accuracy of a ML pipeline and (2) a complexity of the ML pipeline.

7. The method of claim 5, wherein the sorting is based on one of non-dominated sorting or crowding distance sorting.

8. The method of any one of claims 1 to 7, wherein the ML pipeline primitives comprise one of parameters relating to principal component analysis ,PCA), parameters relating to polynomial features, parameters relating to combine features and parameters relating to a decision tree.

9. The method of any one of claims 1 to 8, wherein the ML pipeline comprises one or more of a pre-processing routine, a selection of an algorithm, configuration parameters associated with the algorithm, a training routine of the algorithm on a dataset and/or a trained ML model.

10. The method of any one of claims 1 to 9, wherein the execution is performed by a health/operations monitoring system (210) of the data center.

11. A computer-implemented system configured to perform the method of any one of claims 1 to 10.

12. A computer-readable medium comprising instructions which, when executed by a processor, cause the processor to perform the method of any one of claims 1 to 10.

## Patentansprüche

1. Computerimplementiertes Verfahren (1100) zum Aufrechterhalten eines Datenzentrums (200) in betriebsfähigen Konditionen und zum Bestimmen, ob eine Wartung erforderlich ist, basierend auf einer für maschinelles Lernen (ML) erzeugten und trainierten Pipeline, wobei das Verfahren Folgendes umfasst:
(a) Zugreifen (1102) auf einen Datensatz, der sich auf Operationen des Datenzentrums bezieht, aus einer Datenbank, wobei die Daten dazu geeignet sind, die jeweiligen Leistungen einer Vielzahl von ML-Pipelines zu bewerten, wobei der Datensatz Betriebsdaten, die durch Sensoren erzeugt werden, und/oder einen automatischen Statusbericht, der durch verschiedene Vorrichtungen des Datenzentrums (200) erzeugt wird, umfasst;
(b) Erzeugen (1104) einer Vielzahl von ML-Pipelines, von denen jede einer jeweiligen ML-Pipeline-Konfiguration zugeordnet ist, aus einer Vielzahl von ML-Pipeline-Primitiven;
(c) Auswählen (1106) eines Teilsatzes von ML-Pipelines aus der Vielzahl von ML-Pipelines, wobei das Auswählen auf dem Training jeder der Vielzahl von ML-Pipelines unter Verwendung eines ersten Satzes der Daten basiert, wobei der erste Satz ein erster Teilsatz der Daten ist und ein erstes Datenvolumen definiert, wobei eine Anzahl von ML-Pipelines aus dem Teilsatz von ML-Pipelines geringer ist als eine Anzahl von ML-Pipelines aus der Vielzahl von ML-Pipelines;
(d) Evolvieren (1108) des Teilsatzes von ML-Pipelines, um evolvierte ML-Pipelines zu erzeugen, was entweder Anwenden einer Mutation, Anwenden eines Crossovers oder Anwenden eines Klonens auf jede ML-Pipeline des Teilsatzes von ML-Pipelines umfasst;
(e) Auswählen (1110) eines Teilsatzes von evolvierten ML-Pipelines aus den evolvierten ML-Pipelines, wobei die Auswahl auf einem zweiten Datensatz basiert, wobei der zweite Datensatz ein zweiter Teilsatz der Daten ist und ein zweites Datenvolumen definiert, wobei das zweite Volumen größer ist als das erste Volumen, wobei eine Anzahl von ML-Pipelines aus dem Teilsatz von evolvierten ML-Pipelines geringer ist als eine Anzahl von ML-Pipelines aus den evolvierten ML-Pipelines;
(f) Iterieren (1112) von (d) bis (e), bis eine Bestimmung erfolgt, dass das Iterieren von (d) bis (e) basierend auf der Anzahl von ML-Pipelines aus dem Teilsatz der evolvierten ML-Pipelines, die gleich eins (1) ist, zu stoppen ist; und
(g) Verwenden der Ausgabe der verbleibenden ML-Pipeline zum Ausführen einer prädiktiven Wartung des Rechenzentrums.

2. Verfahren nach Anspruch 1, wobei die Anzahl von ML-Pipelines aus dem Teilsatz von evolvierten ML-Pipelines die Hälfte der Anzahl von ML-Pipelines aus den evolvierten ML-Pipelines beträgt und das zweite Volumen das Doppelte des ersten Volumens ist.

3. Verfahren nach Anspruch 1, wobei die Wahrscheinlichkeit, dass eine Mutation angewendet wird, 90 % und die Wahrscheinlichkeit, dass ein Crossover angewendet wird, 10 % beträgt.

4. Verfahren nach einem der Ansprüche 1 bis 3, wobei der zweite Teilsatz der Daten den ersten Teilsatz der Daten umfasst.

5. Verfahren nach einem der Ansprüche 1 bis 4, wobei das Auswählen eines Teilsatzes von evolvierten ML-Pipelines aus den evolvierten ML-Pipelines Bewerten jeder der ML-Pipelines der evolvierten ML-Pipelines und Sortieren der ML-Pipelines der evolvierten ML-Pipelines umfasst.

6. Verfahren nach Anspruch 5, wobei die Leistungen der Vielzahl von ML-Pipelines und das Bewerten auf (1) einer Genauigkeit einer ML-Pipeline und (2) einer Komplexität der ML-Pipeline basieren.

7. Verfahren nach Anspruch 5, wobei das Sortieren auf einem von nicht-dominiertem Sortieren oder Sortieren nach Verdrängungsabstand basiert.

8. Verfahren nach einem der Ansprüche 1 bis 7, wobei die ML-Pipeline-Primitive eines von Parametern, die sich auf die Hauptkomponentenanalyse (PCA) beziehen, Parametern, die sich auf polynomiale Merkmale beziehen, Parametern, die sich auf die Kombination von Merkmalen beziehen, und Parametern, die sich auf einen Entscheidungsbaum beziehen, umfassen.

9. Verfahren nach einem der Ansprüche 1 bis 8, wobei die ML-Pipeline eines oder mehrere von einer Vorverarbeitungsroutine, einer Auswahl eines Algorithmus, dem Algorithmus zugeordnete Konfigurationsparameter, einer Trainingsroutine des Algorithmus an einem Datensatz und/oder ein trainiertes ML-Modell umfasst.

10. Verfahren nach einem der Ansprüche 1 bis 9, wobei die Ausführung durch ein Zustands-/Betriebsüberwachungssystem (210) des Rechenzentrums durchgeführt wird.

11. Computerimplementiertes System, das dazu konfiguriert ist, das Verfahren nach einem der Ansprüche 1 bis 10 durchzuführen.

12. Computerlesbares Medium, umfassend Anweisungen, die bei Ausführung durch einen Prozessor den Prozessor veranlassen, das Verfahren nach einem der Ansprüche 1 bis 10 durchzuführen.

## Revendications

1. Procédé mis en œuvre par ordinateur (1100) pour maintenir un centre de données (200) dans des conditions de fonctionnement et déterminer si une maintenance est nécessaire sur la base d'un pipeline d'apprentissage automatique, ML, généré et entraîné, le procédé comprenant :
(a) l'accès (1102), à partir d'une base de données, à un ensemble de données relatif à des opérations du centre de données, les données étant adaptées à l'évaluation des performances respectives d'une pluralité de pipelines ML, dans lequel l'ensemble de données comprend des données d'opération générées par des capteurs et/ou un rapport d'état automatique généré par divers dispositifs du centre de données (200) ;
(b) la génération (1104), à partir d'une pluralité de primitives de pipeline ML, de la pluralité de pipelines ML, chacun étant associé à une configuration de pipeline ML respective ;
(c) la sélection (1106) d'un sous-ensemble de pipelines ML parmi la pluralité de pipelines ML, la sélection étant basée sur l'entraînement de chacun de la pluralité de pipelines ML en utilisant un premier ensemble des données, le premier ensemble étant un premier sous-ensemble des données et définissant un premier volume de données, un nombre de pipelines ML du sous-ensemble de pipelines ML étant inférieur à un nombre de pipelines ML de la pluralité de pipelines ML ;
(d) l'évolution (1108) du sous-ensemble de pipelines ML pour générer des pipelines ML évolués, comprenant l'une de l'application d'une mutation, de l'application d'un croisement ou de l'application d'un clonage à chaque pipeline ML du sous-ensemble de pipelines ML ;
(e) la sélection (1110) d'un sous-ensemble de pipelines ML évolués à partir des pipelines ML évolués, la sélection étant basée sur un second ensemble des données, le second ensemble étant un second sous-ensemble des données et définissant un second volume de données, le second volume étant plus grand que le premier volume, un nombre de pipelines ML du sous-ensemble de pipelines ML évolués étant inférieur à un nombre de pipelines ML des pipelines ML évolués ;
(f) l'itération (1112) (d) à (e) jusqu'à ce qu'il soit déterminé que l'itération (d) à (e) doit être arrêtée sur la base du nombre de pipelines ML du sous-ensemble de pipelines ML évolués égal à un (1) ; et
(g) l'utilisation de la sortie du pipeline ML restant pour exécuter la maintenance prédictive du centre de données.

2. Procédé selon la revendication 1, dans lequel le nombre de pipelines ML du sous-ensemble de pipelines ML évolués est égal à la moitié du nombre de pipelines ML des pipelines ML évolués et le second volume est le double du premier volume.

3. Procédé selon la revendication 1, dans lequel une probabilité qu'une mutation soit appliquée est de 90 % et une probabilité qu'un croisement soit appliqué est de 10 %.

4. Procédé selon l'une quelconque des revendications 1 à 3, dans lequel le second sous-ensemble des données comprend le premier sous-ensemble des données.

5. Procédé selon l'une quelconque des revendications 1 à 4, dans lequel la sélection d'un sous-ensemble de pipelines ML évolués à partir des pipelines ML évolués comprend la notation de chacun des pipelines ML des pipelines ML évolués et le tri des pipelines ML des pipelines ML évolués.

6. Procédé selon la revendication 5, dans lequel les performances de la pluralité de pipelines ML et la notation sont basées sur (1) une précision d'un pipeline ML et (2) une complexité du pipeline ML.

7. Procédé selon la revendication 5, dans lequel le tri est basé sur l'un d'un tri non dominé ou d'un tri par distance de densité.

8. Procédé selon l'une quelconque des revendications 1 à 7, dans lequel les primitives de pipeline ML comprennent l'un des paramètres relatifs à l'analyse en composantes principales, ACP, des paramètres relatifs à des caractéristiques polynomiales, des paramètres relatifs à des caractéristiques combinées et des paramètres relatifs à un arbre de décision.

9. Procédé selon l'une quelconque des revendications 1 à 8, dans lequel le pipeline ML comprend l'un ou plusieurs d'une routine de prétraitement, d'une sélection d'un algorithme, de paramètres de configuration associés à l'algorithme, d'une routine d'entraînement de l'algorithme sur un ensemble de données et/ou d'un modèle ML entraîné.

10. Procédé selon l'une quelconque des revendications 1 à 9, dans lequel l'exécution est réalisée par un système de surveillance de l'état/des opérations (210) du centre de données.

11. Système mis en œuvre par ordinateur configuré pour réaliser le procédé selon l'une quelconque des revendications 1 à 10.

12. Support lisible par ordinateur comprenant des instructions qui, lorsqu'elles sont exécutées par un processeur, amènent le processeur à réaliser le procédé selon l'une quelconque des revendications 1 à 10.
